# EUROPEAN PATENT SPECIFICATION

(11) **EP 4 474 275 B1**
(45) Date of publication and mention of the grant of the patent: **04.11.2026**
(21) Application number: 24180569.6
(22) Date of filing: 06.06.2024
(51) Int. Cl.: B64D 11/00, B64D 11/06, B60N 2/02, B60N 3/00, B60N 3/10, B61D 33/00

(54) **CONFIGURABLE MULTI-CLASS PASSENGER SEAT ASSEMBLY**
KONFIGURIERBARE MEHRKLASSIGE FAHRGASTSITZANORDNUNG
ENSEMBLE SIÈGE PASSAGER MULTI-CLASSE CONFIGURABLE

(30) Priority: 06.06.2023 US 202363471415 P; 05.06.2024 US 202418734130
(43) Date of publication of application: 11.12.2024
(73) Proprietor: B/E Aerospace, Inc., Winston-Salem, NC 27105 (US)
(72) Inventor: EISENHARDT, Geoffrey L., Olathe, KS (US); VANINETTI, Travis J., Bothell, WA (US); SANTIAGO, Mauricio, Redmond, WA (US); PRINCIP, Michael M., Winston-Salem, NC (US); VELET, Alexander L., Clemmons, NC (US); HANSSON, Charles Martin, Winston-Salem, NC (US); MILLS, Daniel C., Pilot Mountain, NC (US); KASH, James S., Winston-Salem, NC (US); TABAKOVIC, Ferhad, Winston-Salem, NC (US); FINLAY, Travis K., Winston-Salem, NC (US); GREEN, Brian D., King, NC (US)
(74) Representative: Dehns

(56) References cited:
- US-A1- 2007 085 389
- US-A1- 2007 246 981
- US-A1- 2015 274 299
- US-A1- 2019 061 955
- US-A1- 2019 308 731
- US-A1- 2020 156 794
- US-B1- 11 034 453
- US-B2- 8 807 481

## Description

### TECHNICAL FIELD AND BACKGROUND

The present disclosure relates generally to passenger seats for airliners and other conveyances, and more particularly, to an integrated passenger seat assembly including two seats, a center console, and various privacy, utility, and comfort features available in different configurations depending on the carrier and/or intended seating class for the seat assembly.

Many passenger cabins include separate economy and premium seating classes. Passenger seats may differ between the seating classes, wherein economy class seats are designed to maximize seat density, and premium class seats are designed to maximize comfort. Each seat within the same seating class is typically the same in terms of adjustability, comfort, privacy, and included features.

In some instances, a carrier may want different seat configurations within the same seating class. For example, a carrier may want to enhance privacy only for those seats positioned in or near high-traffic areas, include certain features based on the location of the seat within a seating class, or add features to some seats to generate additional revenue. In other instances, a carrier may want to use the same basic seat design in different seating classes, but enhance certain features and relax others depending on the particular seating class. Traditional passenger seats are not easily reconfigured to provide variation desirable to carriers. US 2019/061955 relates to a passenger seat privacy headrest. US 2019/308731 relates to an aircraft passenger seating unit. US 2007/246981 relates to a passenger seating arrangement.

Therefore, what is needed is a passenger seat assembly that is easily reconfigurable in terms of comfort, privacy, and included features.

### BRIEF SUMMARY

In one aspect, embodiments of the inventive concepts disclosed herein are directed to a passenger seat assembly including a first passenger seat including a first headrest and a first privacy provision positioned on an outboard side of the first headrest, a second passenger seat including a second headrest and a second privacy provision positioned on an outboard side of the second headrest, and a center console positioned between the first passenger seat and the second passenger seat. In embodiments, the center console includes a first armrest serving the first passenger seat, a second armrest serving the second passenger seat and a fixed table positioned forward of the first and second armrests.

The passenger seat assembly further includes an upwardly extending fixed privacy divider positioned atop the center console and between the first armrest and the second armrest, an upwardly extending movable privacy divider deployable in a forward direction relative to the upwardly extending fixed privacy divider, at least one first amenity mounted to a first side of the upwardly extending fixed privacy divider facing the first passenger seat, and at least one second amenity mounted to a second side of the upwardly fixed privacy divider facing the second passenger seat.

In some embodiments, the at least one first amenity includes at least one of an article holder and a reading light, and the at least one second amenity includes at least one of an article holder and a reading light.

The center console further includes, on a first side of the center console facing the first passenger seat, a first cup holder positioned below the fixed table. In some embodiments, a first open storage compartment may be positioned below the first armrest. On a second side of the center console facing the second passenger seat, a second cup holder is positioned below the fixed table and a second open storage compartment may be positioned below the second armrest.

In some embodiments, a first remote control is removably mounted to the first side of the center console and positioned below the fixed table, at least one first power outlet is mounted in the first open storage compartment, a second remote control is removably mounted to the second side of the center console and positioned below the fixed table, and at least one second power outlet is mounted in the second open storage compartment.

In some embodiments, the first privacy provision is a first headrest privacy assembly mounted behind the first headrest, the first headrest privacy assembly including at least one laterally positioned panel that extends forward past the first headrest, and the second privacy provision is a second headrest privacy assembly mounted behind the second headrest, the second headrest privacy assembly including at least one laterally positioned panel that extends forward past the second headrest.

According to another aspect, embodiments disclosed herein are directed to a two-seat passenger seat assembly including a frame assembly, a first passenger seat mounted to the frame assembly, a second passenger seat mounted to the frame assembly, and a center console mounted to the frame assembly and positioned between the first passenger seat and the second passenger seat, the center console including a first armrest serving the first passenger seat, a second armrest serving the second passenger seat, and a fixed table positioned forward of the first and second armrests.

In some embodiments, at least one of the first passenger seat, the second passenger seat, and the center console are configured to be equipped with at least one of a privacy feature and a utility feature.

This summary is provided solely as an introduction to subject matter that is fully described in the following detailed description and drawing figures. This summary should not be considered to describe essential features nor be used to determine the scope of the claims. Moreover, it is to be understood that both the foregoing summary and the following detailed description are explanatory only and are not necessarily restrictive of the subject matter claimed.

### BRIEF DESCRIPTION OF THE DRAWINGS

Implementations of the inventive concepts disclosed herein may be better understood when consideration is given to the following detailed description thereof. Such description makes reference to the included drawings, which are not necessarily to scale, and in which some features may be exaggerated and some features may be omitted or may be represented schematically in the interest of clarity. Like reference numerals in the drawings may represent and refer to the same or similar element, feature, or function. In the drawings:
FIG. 1 is a front isometric view of a passenger seat assembly, in accordance with example embodiments of this disclosure;
FIG. 2 is rear isometric view of the passenger seat assembly;
FIG. 3 is a front elevation view of the passenger seat assembly;
FIG. 4 is a rear elevation view of the passenger seat assembly;
FIG. 5 is a left side view of the passenger seat assembly;
FIG. 6 is a right side view of the passenger seat assembly;
FIG. 7 is a top view of the passenger seat assembly;
FIG. 8 is a bottom view of the passenger seat assembly;
FIG. 9 is a fragmentary front view of the passenger seat assembly illustrating an asymmetrical headrest privacy assembly including an integrated reading light, in accordance with example embodiments of this disclosure;
FIG. 10 is a fragmentary front view of the passenger seat assembly illustrating a symmetrical headrest privacy assembly, in accordance with example embodiments of this disclosure;
FIG. 11 is a fragmentary front view of the passenger seat assembly illustrating a headrest without a privacy feature, in accordance with example embodiments of this disclosure;
FIG. 12 is a fragmentary rear view of the passenger seat assembly including an asymmetrical headrest privacy feature, in accordance with example embodiments of this disclosure;
FIG. 13 is a front isometric view of a headrest and associated symmetrical headrest privacy assembly, in accordance with example embodiments of this disclosure;
FIG. 14 is a front isometric view of a headrest illustrated mounted to a symmetrical headrest privacy assembly, in accordance with example embodiments of this disclosure;
FIG. 15 is a rear isometric view of a symmetrical headrest privacy assembly illustrated movably mounted to vertical guide posts, in accordance with example embodiments of this disclosure;
FIG. 16 is a fragmentary view of a center console including a featured privacy divider, in accordance with example embodiments of this disclosure;
FIG. 17 is a front isometric view of a center console, in accordance with example embodiments of this disclosure;
FIG. 18 is a fragmentary view of the center console illustrating console features, in accordance with example embodiments of this disclosure; and
FIG. 19 is a fragmentary view of the center console illustrating console features, in accordance with example embodiments of this disclosure.

### DETAILED DESCRIPTION

In the present description the unit "inch" used is not a SI unit. The correspondence between this unit and the SI unit is the following: 1 inch corresponds to 2.54cm. Before explaining at least one embodiment of the concepts disclosed herein in detail, it is to be understood that the concepts are not limited in their application to the details of construction and the arrangement of the components or steps or methodologies set forth in the following description or illustrated in the drawings. In the following detailed description of embodiments of the instant concepts, numerous specific details are set forth in order to provide a more thorough understanding of the concepts. However, it will be apparent to one of ordinary skill in the art having the benefit of the instant disclosure that the concepts disclosed herein may be practiced without these specific details. In other instances, well-known features may not be described in detail to avoid unnecessarily complicating the instant disclosure. The concepts disclosed herein are capable of other embodiments or of being practiced or carried out in various ways. Also, it is to be understood that the phraseology and terminology employed herein is for the purpose of description and should not be regarded as limiting.

As used herein, a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only, and should not be construed to limit the concepts disclosed herein in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of the "a" or "an" are employed to describe elements and components of embodiments of the instant inventive concepts. This is done merely for convenience and to give a general sense of the inventive concepts, and "a" and "an" are intended to include one or at least one and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment of the concepts disclosed herein. The appearances of the phrase "in some embodiments" in various places in the specification are not necessarily all referring to the same embodiment, and embodiments of the inventive concepts disclosed may include one or more of the features expressly described or inherently present herein.

Broadly, embodiments of the concepts disclosed herein are directed to passenger seat assemblies for installation in, for example, airliners and other conveyances. In some embodiments, the passenger seat assembly is an integrated unit including a first seat, a second seat, and a center console positioned between the first and second seats. The first and second seats are positioned side-by-side, parallel, aligned, and face the same direction. The seat assembly may be installed in an aircraft passenger cabin, for instance in a business or premium seating class. The seat assembly may be installed to one side of an aircraft longitudinal aisle, between spaced aircraft longitudinal aisles, and in other locations. Each of the first and second seats is equipped with a headrest, and the headrest may be provided in different configurations depending on the desired degree of privacy. The headrest may further serve to mount other seat features, for instance a reading light. The center console is also configurable to include different features, controls, storage space, etc., and in some cases includes a privacy divider also configurable to include different features. A seat supplier may present different configuration options to a carrier who may choose a particular seat configuration based on preference, seat location within the aircraft, seat location relative to other seats, etc. The seat assembly is readily reconfigurable by interchanging certain components for others differently equipped.

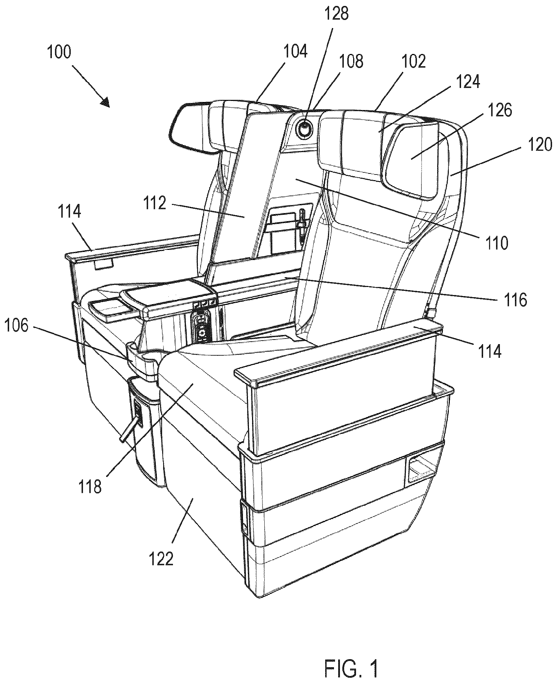

FIG. 1 illustrates a passenger seat assembly 100 according to the present disclosure. In some embodiments, the seat assembly 100 is installable as an integrated unit including a first seat 102, a second seat 104, and a center console 106 positioned between the first and second seats 102, 104. In embodiments, the seat assembly 100 includes a privacy divider 108 positioned atop the center console 106. In some embodiments, the privacy divider 108 includes an upwardly extending portion 110 and a forward deploying portion 112 that may be stowed or deployed depending on passenger preference, phase of flight, etc. Each of the center console 106 and the privacy divider 108 includes a first lateral side facing the first seat 102, and a second lateral side facing the second seat 104. Each seat 102, 104 includes two armrests, wherein one armrest 114 is positioned at the lateral extend of the seat assembly 100 and the other amrest 116 is positioned on the center console 106. As such, the center console 106 includes a first armrest 116 serving the first seat 102, and a second armrest 116 serving the second seat 104. The outboard armrests 114 may be configured to raise and lower.

Each seat 102, 104 generally includes a seat bottom 118, a backrest 120, and a leg rest 122. In use, each seat component may be adjustable, and seat component movements may be coordinated to change the sitting position between upright and reclined through various intermediate sitting positions. In some embodiments, each seat 102, 104 may recline to lay flat depending on the seat pitch and adjustment capabilities of the seat. Each backrest 120 includes a headrest 124. As shown, each headrest 124 is configured as an asymmetrical headrest including, on the outboard side of the seat, a lateral privacy feature 126 that extends in a forward direction. Also as shown, the privacy divider 108 is configured with a reading light 128 mounted to each lateral side of the upwardly extending portion of the privacy divider 108 arranged facing its respective seat 102, 104.

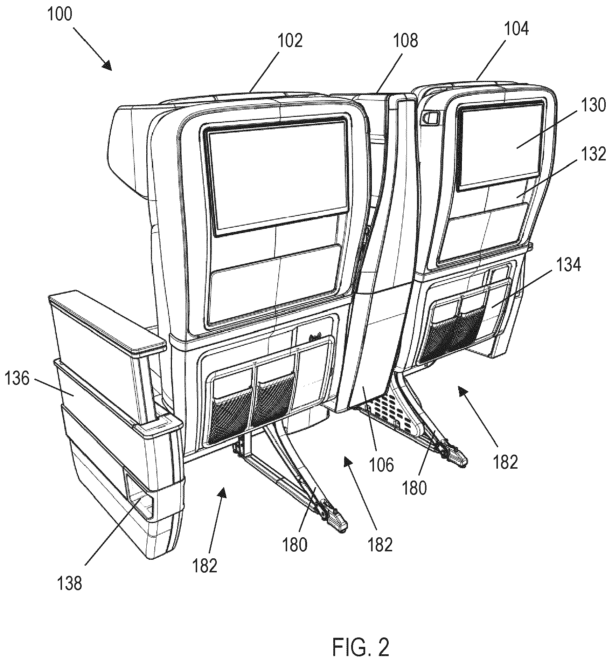

FIG. 2 illustrates the back of the passenger seat assembly 100. The backrest 120 of each seat 102, 104 may be used to mount a video monitor 130, a literature pocket 132, and various other storage pockets 134 and amenities for use by passengers seated in the next row. As shown, the center console 106 and the privacy divider 108 together substantially fill the space between the first and second seats 102, 104 to enhance privacy between seat rows. Also as shown, the outboard armrest housing 136 may include a step 138 for gaining access to overhead storage bins typically found in airliners. Legs 180 of the seat assembly 100 demarcate under seat footwells 182 for use by passengers in the next row.

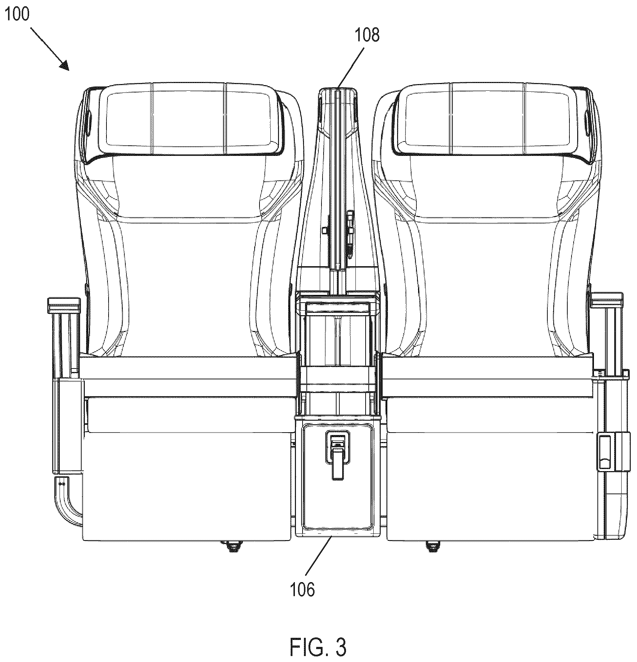

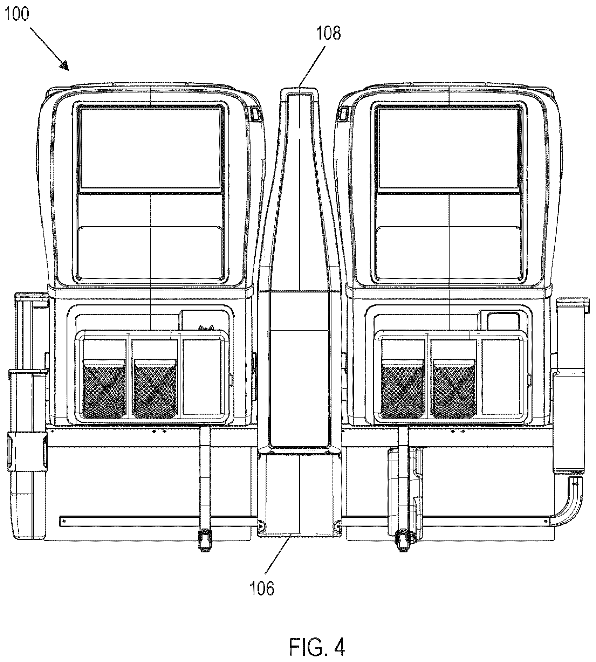

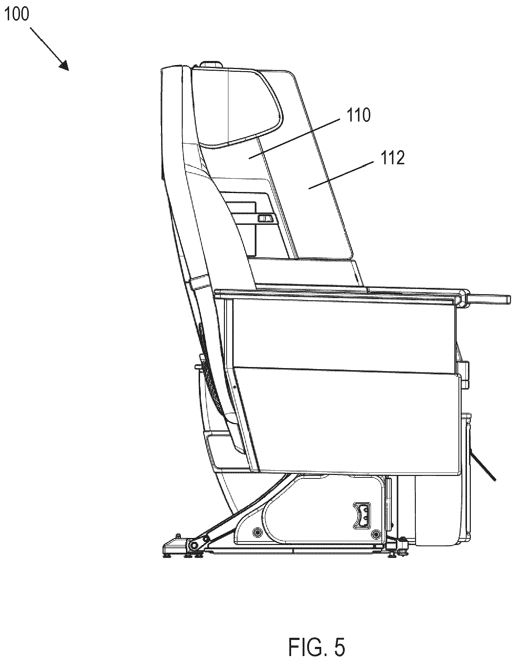

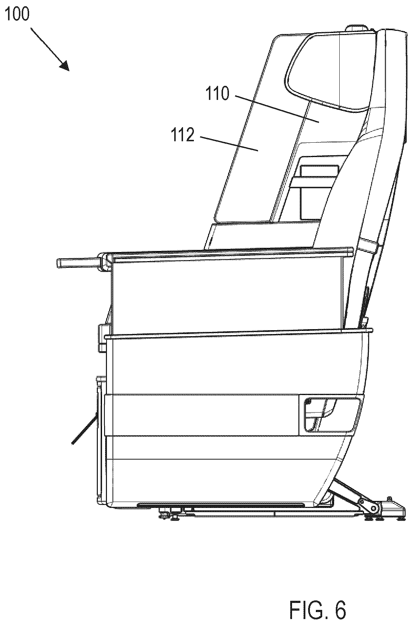

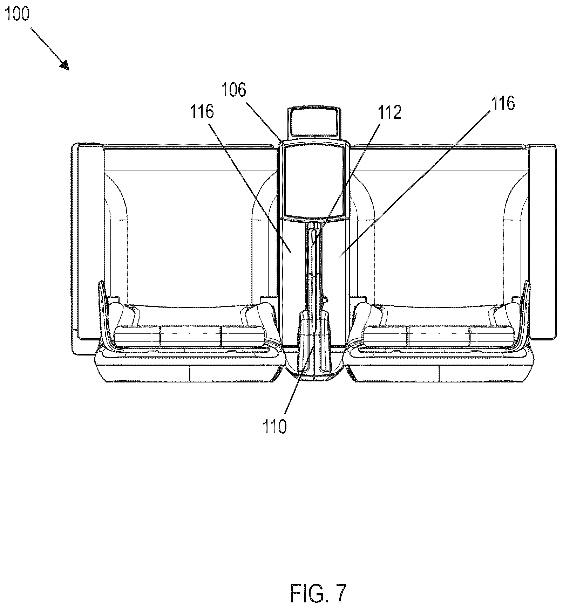

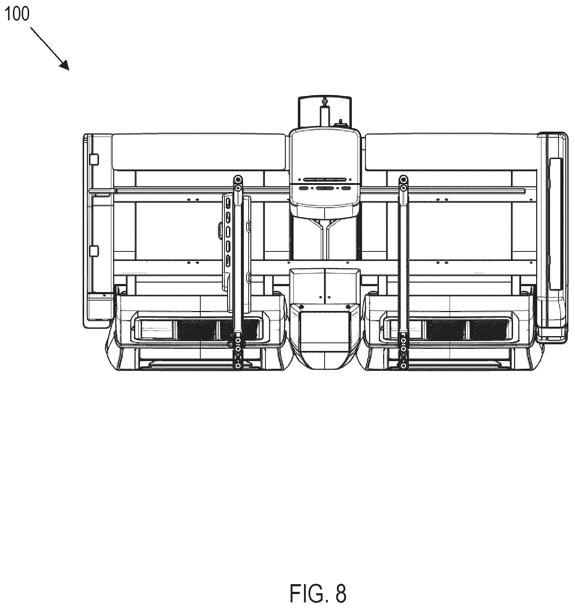

FIGS. 3-8 illustrate the passenger seat assembly 100 from different angles to show the overall shape and footprint of the seat assembly 100. FIGS. 3 and 4 particularly illustrate the privacy between longitudinally adjacent like seat assemblies 100 provided by the combination of the center console 106 and the privacy divider 108. FIGS. 5 and 6 particularly illustrate the privacy between the seats provided by the upwardly extending portion 110 and the forward deployed portion 112 of the privacy divider 108. FIG. 7 particularly illustrates the first and second armrests 116 positioned atop the center console 106, and the separation of the armrests 116 by the upwardly extending portion 110 and forward deployed portion 112.

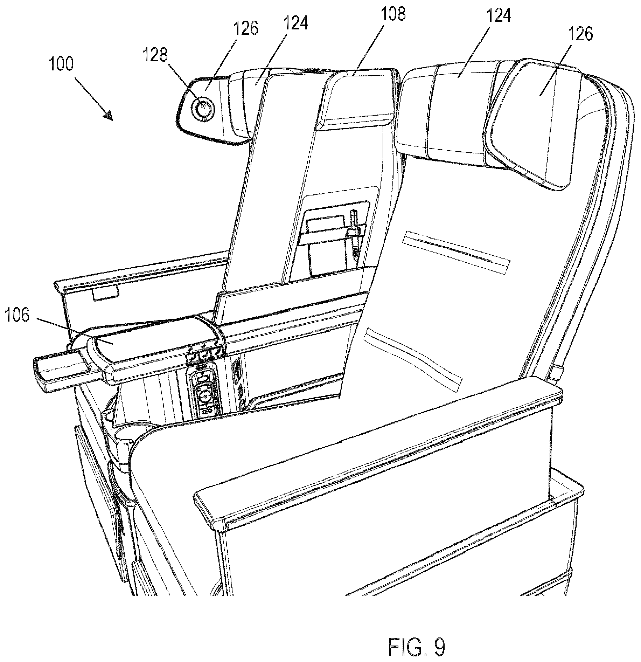

FIG. 9 illustrates a particular configuration of the seat assembly 100 including the privacy divider 108 positioned atop the center console 106, and asymmetrical headrests 124 each including an outboard lateral privacy feature 126 and a reading light 128 mounted to the inboard side of the lateral privacy feature 126. The reading light 128 may be directable by the passenger.

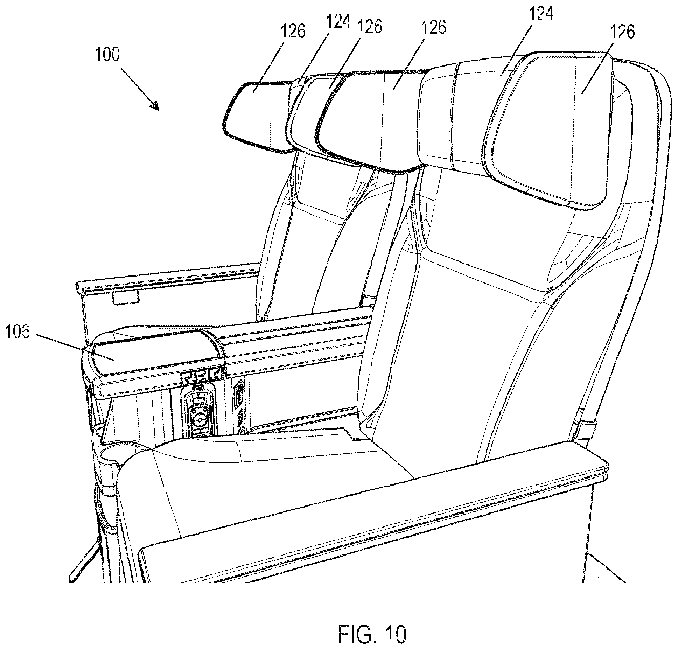

FIG. 10 illustrates another configuration of the seat assembly 100 including symmetrical headrests 124 each including an outboard lateral privacy feature 126 and an inboard lateral privacy feature 126 considering the lack of a privacy divider positioned atop the center console 106. Thus, in this configuration, privacy between seated passengers is provided by the inboard lateral privacy features and aisle privacy is provided by the outboard lateral privacy features. Although not shown, one or more of the inboard and outboard lateral privacy features may include a directable reading light.

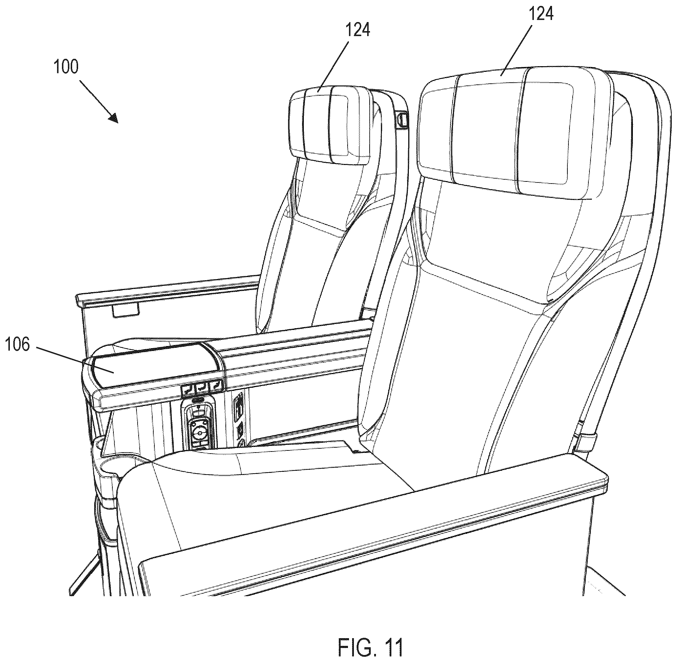

FIG. 11 illustrates yet another configuration of the seat assembly 100 including padded headrests 124 each without any lateral privacy features, and without any privacy divider positioned atop the center console 106.

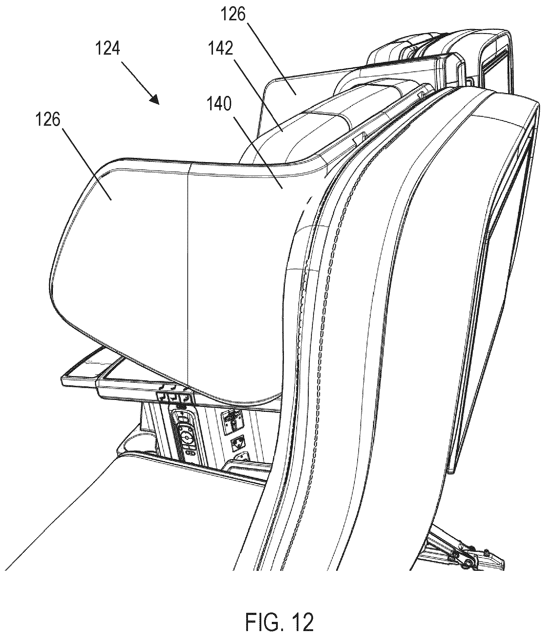

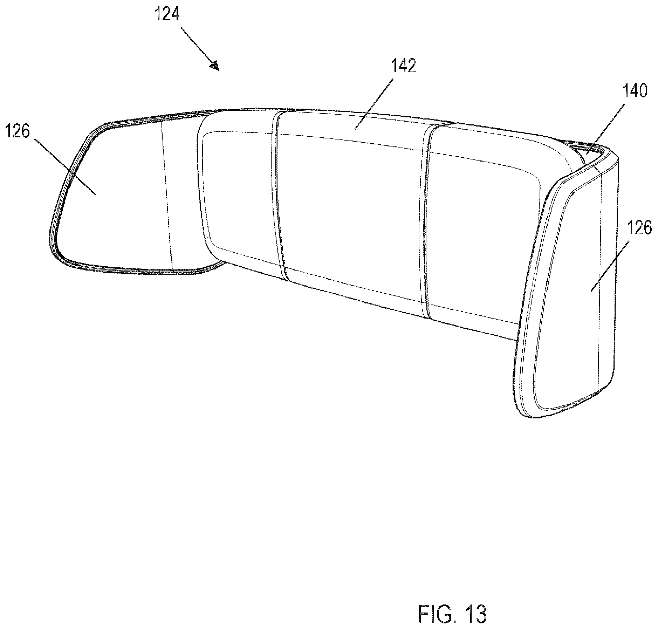

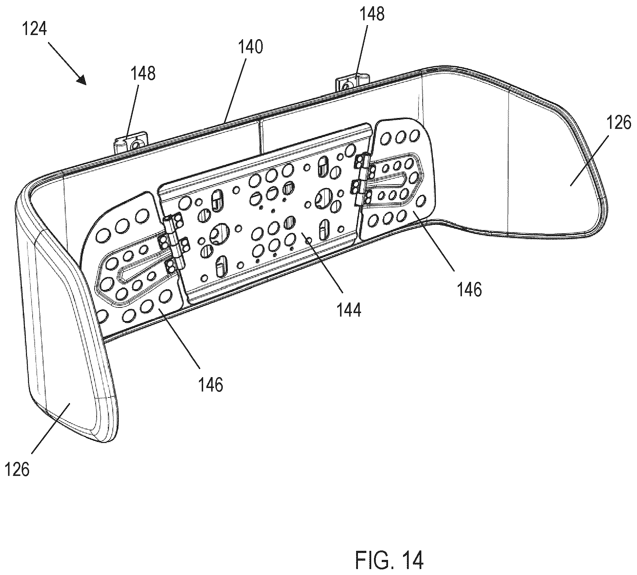

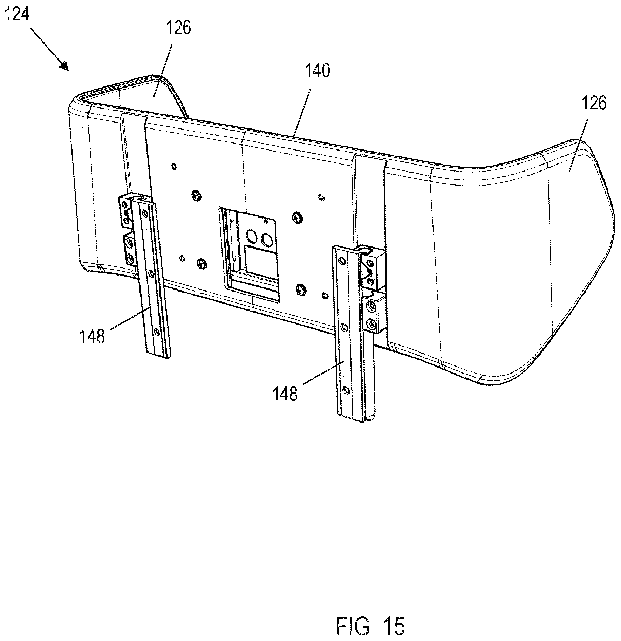

FIGS. 12-15 illustrate a particular conceived example of a symmetrical headrest 124 including a housing 140 defining inboard and outboard lateral privacy features 126, and a padded headrest 142 mounted to the front of and centered on the housing 140. The padded headrest 142 includes a frame having a fixed center portion 144 and left and right supports 146 pivotally attached to the fixed center portion 144. In use, each of the left and right supports 146 can be individually pivoted forward as a comfort or sleeping provision. In embodiments, the headrest 124 is coupled to vertical rails 148 on the backrest for vertical motion to adjust the headrest 124 up and down.

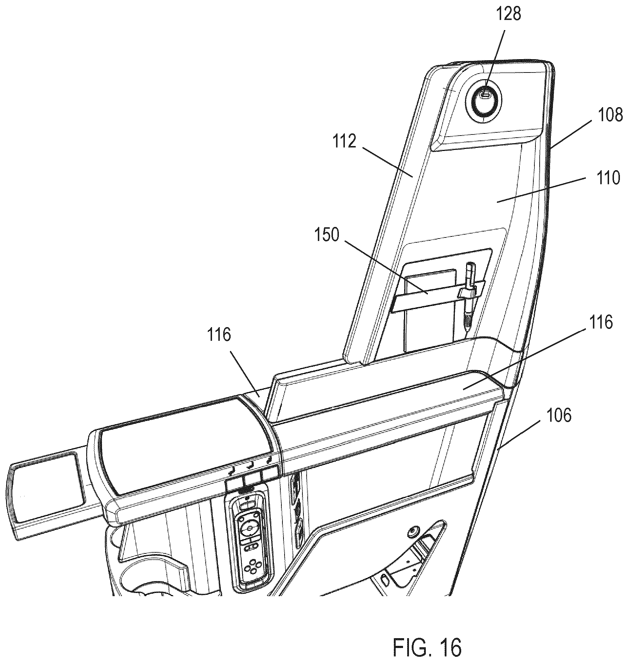

FIG. 16 illustrates a particular conceived configuration of the center console 106 including the privacy divider 108. Each lateral side of the upwardly extending portion 110 may include a directable reading light 128 positioned above a notepad and writing utensil holder 150 including an elastic band attached at its opposing ends to the privacy divider 108 and including a loop. The forward deploying portion 112 is shown stowed, at least partly, within the upwardly extending portion 110. The base of the privacy divider bisects a portion of the top of the center console such that the armrests 116 serving the first and second seats are separate.

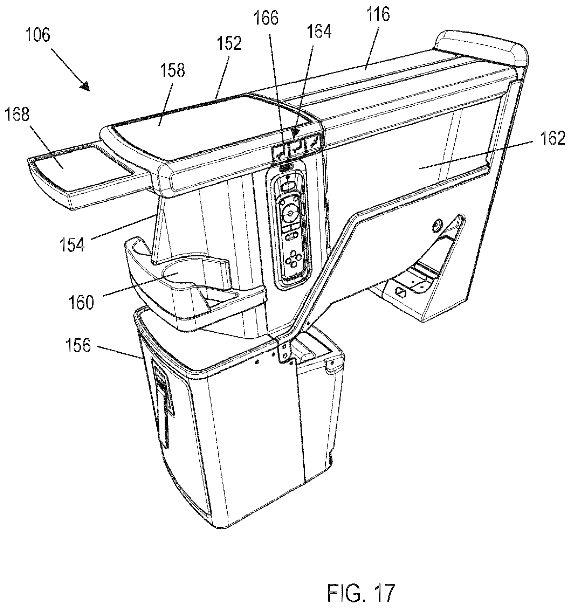

FIG. 17 illustrates the center console 106 without the privacy divider. The center console 106 generally includes an upper console portion 152 and lower console portion 154. The longitudinal axis of the upper console portion 152 is oriented substantially horizontal, while the longitudinal axis of the lower console portion 154 is oriented substantially vertical. In some embodiments, the lower console portion 154 supports the upper console portion 152 from below. In some embodiments, at least portions of the upper console portion 152 and the lower console portion 154 may be integrally formed. Portions of the upper and lower console portions 152, 154 may be made from, for example, plastic due to its durability, light weight, ability to be colored, cleanability, etc.

As shown, the upper console portion 152 has a top, a front, a back, a first (e.g., left) lateral side, and a second (e.g., right) lateral side. The center console 106 may include additional console portions, for instance a base 156 configured to be attached to the floor. The top of the upper console portion 152 forms a substantially flat horizontal surface including a table 158 and the armrests 116. The table 158 may open to provide access to internal compartments formed in the interior space within the upper console portion 152. The armrest 116 may be provided as two laterally-adjacent armrests configured to rotate open. In some embodiments, the lower console portion 154 may include at least one cupholder 160 and at least one literature pocket 162 on each lateral side of the lower console portion 154.

In embodiments, a cable-actuated passenger control unit (PCU) 164 is positioned in interior space formed in the upper console portion 152. Mechanical pushbuttons 166 of the cable-actuated PCU 164 may be presented through one of the first and second lateral sides of the upper console portion 152. In this position, a passenger resting his/her arm on the armrest 116 is able to operate the pushbuttons 166 with their thumb for comfort and convenience. In the case of the center console 106, two cable-actuated PCUs 164 may be positioned in the interior space formed in the upper console portion 152 with the pushbuttons 166 of the first cable-actuated PCU 164 presented through the first lateral side, and the pushbuttons 166 of the second cable-actuated PCU 164 presented through the second lateral side. In some embodiments, the upper console portion 152 may be symmetrical about a vertical line of symmetry.

In embodiments, the width of the upper console portion 152 may be greater than the thickness of the upper console portion 152, and the height of the lower console portion 154 may be greater than the width of the lower console portion 154. In some embodiments, the thickness of the upper console portion 152 may be greater than the width of the lower console portion 154. In a particular embodiment, the upper console portion 152 may be from about 3 inches wide up to about 10 inches wide. In some embodiments, the upper console portion 152 may be no more than 5 inches thick, and more preferably no more than 3 inches thick.

In some embodiments, the first lateral side of the upper console portion 152 includes a first substantially vertical surface and a second inclined surface angled to face a seated passenger looking down at the console 106. The pushbuttons 166 may be presented through the substantially vertical surface. While three pushbuttons 166 are shown, the cable-actuated PCU 164 may include 1, 2, 3...n number of pushbuttons 166 depending on the performance capabilities of the seat. Each pushbutton 166 may carry indicia schematically illustrating the predetermined function associated with that particular pushbutton 166. Indicia may be in the form of graphics, text, printing, labels, illumination, etc., conveying the predetermined function to the passenger. The center console 106 may further include a cocktail table 168 deployable through the front of the upper console portion 152. In embodiments, the cocktail table 168 may be spring-loaded and pushed to activate deployment via a spring force and pushed back into the upper console portion 152 to stow the cocktail table 168 and load the spring for the next deployment.

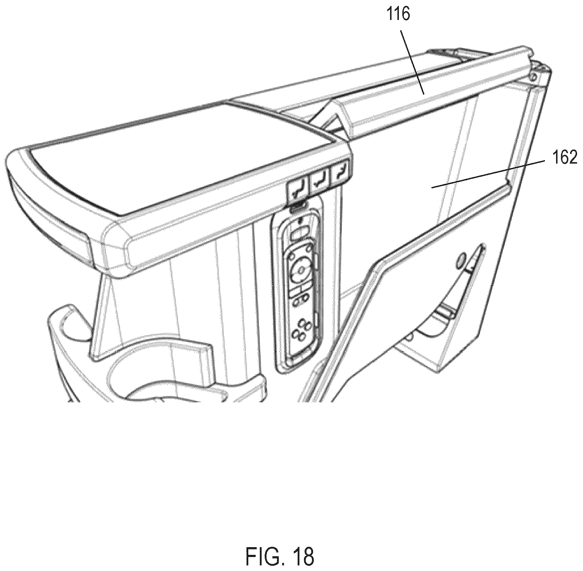

FIG. 18 illustrates an optional rotational capability of the armrests 116 and their positional relationship to the literature pocket 162 or other stowage compartment positioned below each armrest. In use, the armrest 116 may be rotated upward to gain better access to the literature pocket 162 or other stowage compartment.

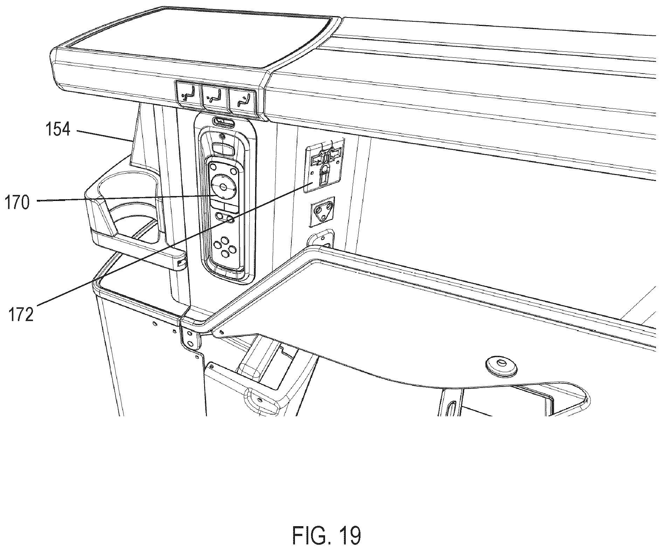

FIG. 19 illustrates further features of the center console, for instance a remote control 170 removably mounted on each lateral side of the lower console portion 154, and power and data ports 172 mounted in the storage space. The center console may be reconfigured to include one or more of the above-described convenience, electronic, comfort and privacy features.

From the above description, it is clear that the concepts disclosed herein are well adapted to achieve the objectives and to attain the advantages mentioned herein as well as those inherent in the concepts disclosed herein. While presently preferred embodiments of the concepts disclosed herein have been described for purposes of this disclosure, it will be understood that numerous changes may be made which will readily suggest themselves to those skilled in the art and which are accomplished within the broad scope and coverage of the inventive concepts claimed herein.

## Claims

1. A passenger seat assembly (100), comprising:
a first passenger seat (102) including a first headrest (124) and a first privacy provision (126) positioned on an outboard side of the first headrest;
a second passenger seat (104) including a second headrest (124) and a second privacy provision (126) positioned on an outboard side of the second headrest; and
a center console (106) positioned between the first passenger seat and the second passenger seat, the center console including:
a first armrest (116) for the first passenger seat;
a second armrest (116) for the second passenger seat;
a table (158) positioned forward of the first and second armrests;
**characterised in that** the center console includes:
a first cup holder positioned below the table and adjacent the first passenger seat; and
a second cup holder position below the table and adjacent the second passenger seat; and
an upwardly extending fixed privacy divider (110) positioned atop the center console and between the first armrest and the second armrest;
an upwardly extending movable privacy divider (112) deployable in a forward direction relative to the upwardly extending fixed privacy divider;
at least one first amenity (128, 150) mounted to a first side of the upwardly extending fixed privacy divider facing the first passenger seat; and
at least one second amenity (128, 150) mounted to a second side of the upwardly fixed privacy divider facing the second passenger seat.

2. The passenger seat assembly (100) according to claim 1, wherein:
the at least one first amenity includes at least one of an article holder (150) and a reading light (128); and
the at least one second amenity includes at least one of an article holder (150) and a reading light (128).

3. The passenger seat assembly (100) according to any preceding claim, wherein the center console further comprises:
a first open storage compartment (162) positioned below the first armrest; and
a second open storage compartment (162) positioned below the second armrest.

4. The passenger seat assembly (100) according to claim 3, further comprising:
a first remote control (170) removably mounted to the first side of the center console and positioned below the fixed table;
at least one first power outlet (172) mounted in the first open storage compartment;
a second remote control (170) removably mounted to the second side of the center console and positioned below the fixed table; and
at least one second power outlet (172) mounted in the second open storage compartment.

5. The passenger seat assembly (100) according to any preceding claim, wherein:
the first privacy provision is a first headrest privacy assembly (140) mounted behind the first headrest (124), the first headrest privacy assembly including at least one laterally positioned panel (126) that extends forward past the first headrest; and
the second privacy provision is a second headrest privacy assembly (140) mounted behind the second headrest (124), the second headrest privacy assembly including at least one laterally positioned panel (126) that extends forward past the second headrest.

6. The passenger seat assembly (100) according to any of claims 1-4, wherein:
the first privacy provision is a first headrest privacy assembly (140) mounted behind the first headrest (124), the first headrest privacy assembly including one laterally positioned panel (126) that extends forward past the first headrest on a side of the first passenger seat positioned apart from the second passenger seat; and
the second privacy provision is a second headrest privacy assembly (140) mounted behind the second headrest (124), the second headrest privacy assembly including at least one laterally positioned panel (126) that extends forward past the second headrest on a side of the second passenger seat positioned apart from the first passenger seat.

## Patentansprüche

1. Fahrgastsitzanordnung (100), umfassend:
einen ersten Fahrgastsitz (102), der eine erste Kopfstütze (124) und eine erste Privatsphärenvorkehrung (126) beinhaltet, die an einer Außenseite der ersten Kopfstütze angeordnet ist;
einen zweiten Fahrgastsitz (104), der eine zweite Kopfstütze (124) und eine zweite Privatsphärenvorkehrung (126) beinhaltet, die an einer Außenseite der zweiten Kopfstütze angeordnet ist; und
eine Mittelkonsole (106), die zwischen dem ersten Fahrgastsitz und dem zweiten Fahrgastsitz angeordnet ist, wobei die Mittelkonsole Folgendes beinhaltet:
eine erste Armlehne (116) für den ersten Fahrgastsitz;
eine zweite Armlehne (116) für den zweiten Fahrgastsitz;
einen Tisch (158), der vor der ersten und der zweiten Armlehne angeordnet ist;
**dadurch gekennzeichnet, dass** die Mittelkonsole Folgendes beinhaltet:
einen ersten Getränkehalter, der unterhalb des Tisches und benachbart zu dem ersten Fahrgastsitz angeordnet ist; und
einen zweiten Getränkehalter, der unterhalb des Tisches und benachbart zu dem zweiten Fahrgastsitz angeordnet ist; und
eine sich nach oben erstreckende feststehende Privatsphärentrennwand (110), die oben auf der Mittelkonsole und zwischen der ersten Armlehne und der zweiten Armlehne angeordnet ist;
eine sich nach oben erstreckende bewegliche Privatsphärentrennwand (112), die in einer Vorwärtsrichtung relativ zu der sich nach oben erstreckenden feststehenden Privatsphärentrennwand ausfahrbar ist;
mindestens ein erstes Ausstattungsmerkmal (128, 150), das an einer dem ersten Fahrgastsitz zugewandten ersten Seite der sich nach oben erstreckenden feststehenden Privatsphärentrennwand angebracht ist; und
mindestens ein zweites Ausstattungsmerkmal (128, 150), das an einer dem zweiten Fahrgastsitz zugewandten zweiten Seite der nach oben feststehenden Privatsphärentrennwand angebracht ist.

2. Fahrgastsitzanordnung (100) nach Anspruch 1, wobei:
das mindestens eine erste Ausstattungsmerkmal mindestens eines von einem Gegenstandshalter (150) und einer Leselampe (128) beinhaltet; und
das mindestens eine zweite Ausstattungsmerkmal mindestens eines von einem Gegenstandshalter (150) und einer Leselampe (128) beinhaltet.

3. Fahrgastsitzanordnung (100) nach einem der vorhergehenden Ansprüche, wobei die Mittelkonsole ferner Folgendes umfasst:
ein erstes offenes Staufach (162), das unterhalb der ersten Armlehne angeordnet ist; und
ein zweites offenes Staufach (162), das unterhalb der zweiten Armlehne angeordnet ist.

4. Fahrgastsitzanordnung (100) nach Anspruch 3, ferner umfassend:
eine erste Fernbedienung (170), die abnehmbar an der ersten Seite der Mittelkonsole angebracht und unterhalb des feststehenden Tisches angeordnet ist;
mindestens eine erste Steckdose (172), die in dem ersten offenen Staufach angebracht ist;
eine zweite Fernbedienung (170), die abnehmbar an der zweiten Seite der Mittelkonsole angebracht und unterhalb des feststehenden Tisches angeordnet ist; und
mindestens eine zweite Steckdose (172), die in dem zweiten offenen Staufach angebracht ist.

5. Fahrgastsitzanordnung (100) nach einem der vorhergehenden Ansprüche, wobei:
die erste Privatsphärenvorkehrung eine erste Kopfstützen-Privatsphärenanordnung (140) ist, die hinter der ersten Kopfstütze (124) angebracht ist, wobei die erste Kopfstützen-Privatsphärenanordnung mindestens eine seitlich angeordnete Platte (126) beinhaltet, die sich nach vorne über die erste Kopfstütze hinaus erstreckt; und
die zweite Privatsphärenvorkehrung eine zweite Kopfstützen-Privatsphärenanordnung (140) ist, die hinter der zweiten Kopfstütze (124) angebracht ist, wobei die zweite Kopfstützen-Privatsphärenanordnung mindestens eine seitlich angeordnete Platte (126) beinhaltet, die sich nach vorne über die zweite Kopfstütze hinaus erstreckt.

6. Fahrgastsitzanordnung (100) nach einem der Ansprüche 1 bis 4, wobei:
die erste Privatsphärenvorkehrung eine erste Kopfstützen-Privatsphärenanordnung (140) ist, die hinter der ersten Kopfstütze (124) angebracht ist, wobei die erste Kopfstützen-Privatsphärenanordnung eine seitlich angeordnete Platte (126) beinhaltet, die sich nach vorne über die erste Kopfstütze hinaus auf einer Seite des ersten Fahrgastsitzes erstreckt, die von dem zweiten Fahrgastsitz beabstandet angeordnet ist; und
die zweite Privatsphärenvorkehrung eine zweite Kopfstützen-Privatsphärenanordnung (140) ist, die hinter der zweiten Kopfstütze (124) angebracht ist, wobei die zweite Kopfstützen-Privatsphärenanordnung mindestens eine seitlich angeordnete Platte (126) beinhaltet, die sich nach vorne über die zweite Kopfstütze hinaus auf einer Seite des zweiten Fahrgastsitzes erstreckt, die von dem ersten Fahrgastsitz beabstandet angeordnet ist.

## Revendications

1. Ensemble siège passager (100), comprenant :
un premier siège passager (102) comportant un premier appui-tête (124) et un premier dispositif de confidentialité (126) positionné sur un côté extérieur du premier appui-tête ;
un second siège passager (104) comportant un second appui-tête (124) et un second dispositif de confidentialité (126) positionné sur un côté extérieur du second appui-tête ; et
une console centrale (106) positionnée entre le premier siège passager et le second siège passager, la console centrale comportant :
un premier accoudoir (116) pour le premier siège passager ;
un second accoudoir (116) pour le second siège passager ;
un plateau (158) positionné à l'avant des premier et second accoudoirs ;
**caractérisé en ce que** la console centrale comporte :
un premier porte-gobelet positionné sous le plateau et adjacent au premier siège passager ; et
un second porte-gobelet positionné sous le plateau et adjacent au second siège passager ; et
un séparateur de confidentialité fixe s'étendant vers le haut (110) positionné au-dessus de la console centrale et entre le premier accoudoir et le second accoudoir ;
un séparateur de confidentialité amovible s'étendant vers le haut (112) déployable dans une direction vers l'avant par rapport au séparateur de confidentialité fixe s'étendant vers le haut ;
au moins un premier aménagement (128, 150) monté sur un premier côté du séparateur de confidentialité fixe s'étendant vers le haut face au premier siège passager ; et
au moins un second équipement (128, 150) monté sur un second côté du séparateur de confidentialité fixe orienté vers le haut face au second siège passager.

2. Ensemble siège passager (100) selon la revendication 1, dans lequel :
l'au moins un premier équipement comporte au moins l'un d'un porte-articles (150) et d'une lampe de lecture (128) ; et
l'au moins un second équipement comporte au moins l'un d'un porte-articles (150) et d'une lampe de lecture (128).

3. Ensemble siège passager (100) selon une quelconque revendication précédente, dans lequel la console centrale comprend en outre :
un premier compartiment de rangement ouvert (162) positionné sous le premier accoudoir ; et
un second compartiment de rangement ouvert (162) positionné sous le second accoudoir.

4. Ensemble siège passager (100) selon la revendication 3, comprenant en outre :
une première télécommande (170) montée de manière amovible sur le premier côté de la console centrale et positionnée sous le plateau fixe ;
au moins une première prise de courant (172) montée dans le premier compartiment de rangement ouvert ;
une seconde télécommande (170) montée de manière amovible sur le second côté de la console centrale et positionnée sous le plateau fixe ; et
au moins une seconde prise de courant (172) montée dans le second compartiment de rangement ouvert.

5. Ensemble siège passager (100) selon une quelconque revendication précédente, dans lequel :
le premier dispositif de confidentialité est un premier ensemble de confidentialité pour appui-tête (140) monté derrière le premier appui-tête (124), le premier ensemble de confidentialité pour appui-tête comportant au moins un panneau positionné latéralement (126) qui s'étend vers l'avant au-delà du premier appui-tête ; et
le second dispositif de confidentialité est un second ensemble de confidentialité pour appui-tête (140) monté derrière le second appui-tête (124), le second ensemble de confidentialité pour appui-tête comportant au moins un panneau positionné latéralement (126) qui s'étend vers l'avant au-delà du second appui-tête.

6. Ensemble siège passager (100) selon l'une quelconque des revendication 1 à 4, dans lequel :
le premier dispositif de confidentialité est un premier ensemble de confidentialité pour appui-tête (140) monté derrière le premier appui-tête (124), le premier ensemble de confidentialité pour appui-tête comportant un panneau positionné latéralement (126) qui s'étend vers l'avant au-delà du premier appui-tête d'un côté du premier siège passager positionné à l'écart du second siège passager ; et
le second dispositif de confidentialité est un second ensemble de confidentialité pour appui-tête (140) monté derrière le second appui-tête (124), le second ensemble de confidentialité pour appui-tête comportant au moins un panneau positionné latéralement (126) qui s'étend vers l'avant au-delà du second appui-tête d'un côté du second siège passager positionné à l'écart du premier siège passager.
